# FASCICULE DE BREVET EUROPEEN

(11) **EP 2 880 100 B1**
(45) Date de publication et mention de la délivrance du brevet: **05.08.2020**
(21) Numéro de dépôt: 13747462.3
(22) Date de dépôt: 17.07.2013
(51) Int. Cl.: C09B 67/02, B01J 13/04, B01J 13/02

(54) **PROCEDE DE FABRICATION DU PAPIER METTANT EN OEURVE UNE SUSPENSION CELLULOSIQUE ET DES PARTICULES PRESENTANT UN COEUR HYDROPHILE ENROBE PAR UNE COUCHE POLYMERIQUE HYDROPHOBE**
VERFAHREN ZUR HERSTELLUNG VON PAPIER UNTER VERWENDUNG EINER ZELLULOSISCHEN SUSPENSION UND PARTIKELN MIT HYDROPHILEM KERN MIT EINER HYDROPHOBEN POLYMERBESCHICHTUNG
PROCESS FOR PRODUCING PAPER USING A CELLULOSIC SUSPENSION AND PARTICLES WHICH HAVE A HYDROPHILIC CORE COATED WITH A HYDROPHOBIC POLYMERIC LAYER

(30) Priorité: 31.07.2012 FR 1257434
(43) Date de publication de la demande: 10.06.2015
(73) Titulaire: Commissariat à l'Énergie Atomique et aux Énergies Alternatives, 75015 Paris (FR)
(72) Inventeur: AUGER, Aurélien, F-72000 Le Mans (FR); PONCELET, Olivier, F-38000 Grenoble (FR)
(74) Mandataire: Cabinet Laurent & Charras
(86) Numéro de dépôt international: PCT/FR2013/051729
(87) Numéro de publication internationale: WO 2014/020256

(56) Documents cités:
- WO-A1-03/015910
- WO-A1-2006/027328
- WO-A1-2006/048166
- WO-A1-2006/048169
- WO-A1-2009/075652
- GB-A- 1 242 689
- KR-B1- 100 886 316

## Description

### DOMAINE DE L'INVENTION

L'invention concerne un procédé de fabrication du papier comprenant l'encapsulation de composés hydrophiles, et plus précisément la préparation de particules, dont le cœur hydrophile est enrobé par une couche polymérique hydrophobe.

Les domaines d'utilisation de la présente invention incluent notamment l'industrie papetière.

### ETAT ANTERIEUR DE LA TECHNIQUE

La protection par encapsulation de composés chimiques et notamment des composés hydrophiles, permet de contrôler ou modifier leurs propriétés. Il est ainsi possible de prédéterminer les conditions de relargage d'un principe actif, d'allonger la durée de vie d'un produit en le protégeant des éléments extérieurs, mais aussi d'améliorer la dispersabilité d'un composé.

Par exemple, dans l'industrie papetière, à l'exception des fibres cellulosiques, la majorité des constituants (tels que les colorants, azurants, ou principes actifs) mis en œuvre sont hydrosolubles. Les procédés de fabrication de papier intervenant essentiellement en milieu aqueux, il est donc particulièrement difficile d'incorporer des composés hydrosolubles. En effet, les fibres formant la feuille de papier ne peuvent retenir que partiellement ces composés hydrosolubles. Par conséquent, cette problématique engendre des pertes considérables, et nécessite un système de recirculation en continu des solutions aqueuses d'azurants et de colorants.

En outre, en fin d'imprégnation, les eaux usées contiennent une quantité importante d'azurants ou de colorants, et doivent donc être spécialement retraitées.

D'autre part, il est quasi impossible de contrôler précisément la quantité d'azurants ou de colorants imprégnés sur le papier. Les blancheurs ou teintes de colorants peuvent donc différer d'une imprégnation à l'autre.

WO 2009/075652 A1 décrit un procédé pour la préparation de microsphères présentant un coeur hydrophile enrobé d'une couche de PLGA, comprenant les étapes suivantes : préparation d'une phase aqueuse comprenant un colorant; préparation d'une phase organique comprenant le PLGA; formation d'une émulsion phase aqueuse dans phase organique par addition de la phase aqueuse dans la phase organique; formation de microsphères; lyophilisation des microsphères.

Afin de remédier à ces problèmes de solubilité et de manque d'interactions entre les agents azurant et les fibres, de nouveaux agents moins hydrosolubles ont été développés. Bien que relativement satisfaisante, cette solution présente l'inconvénient de limiter le choix d'agents azurants, qui en outre, sont plus onéreux que les agents totalement hydrosolubles.

Par conséquent, il existe un besoin technologique de proposer un procédé permettant de diminuer, voire de supprimer les pertes d'azurants et de colorants ainsi que de pouvoir connaitre précisément les quantités déposées.

La présente invention permet de résoudre les problèmes de l'art antérieur concernant notamment la rétention des azurants ou colorants conventionnels dans les procédés de fabrication de papier. Ce procédé mis au point par le Demandeur, permet de préparer des particules par enrobage de composés hydrophiles avec une couche polymérique hydrophobe.

### EXPOSE DE L'INVENTION

Le procédé - objet de la présente invention permet de préparer des nanoparticules et microparticules sphériques contenant en leur cœur un ou plusieurs composés hydrophiles. Ces particules présentent ainsi les propriétés du composé hydrophile encapsulé (fluorescence, pouvoir colorant...) mais aussi les propriétés du ou des polymères constituant la couche polymérique les enrobant (solubilité, barrière à l'oxygène, barrière aux UV...).

Il est donc possible de moduler à souhait les propriétés des particules en jouant sur la nature des composés hydrophiles et du ou des polymères.
Les particules peuvent être ainsi rendues hydrophobes et dispersables dans un milieu aqueux ou organique.
La méthode d'encapsulation peut également présenter d'autres avantages notables selon la nature du polymère constituant la capsule. Comme déjà dit, la couche polymérique enrobant les particules peut notamment assurer leur protection contre le vieillissement UV du composé encapsulé.

Plus précisément, la présente invention concerne un procédé de fabrication du papier mettant en oeuvre une suspension cellulosique et des particules, les particules étant intégrées dans la suspension cellulosique, ou déposées sur le papier formé, les particules présentant un coeur hydrophile enrobé d'une couche polymérique hydrophobe, et étant préalablement préparées selon les étapes suivantes:
- préparation d'une phase aqueuse comprenant au moins un composé hydrophile azurant ou colorant
- préparation d'une phase organique comprenant au moins un polymère hydrophobe ;
- formation d'une émulsion inverse eau dans huile par addition de la phase aqueuse dans la phase organique ;
- trempe thermique de l'émulsion;
- obtention de particules, présentant un diamètre moyen inférieur à 5 micromètres et présentant un coeur hydrophile enrobé d'une couche polymérique hydrophobe;
- isolation des particules ainsi obtenues.

Le cœur des particules est formé en tout ou partie d'au moins un composé hydrophile (azurants, colorants). La couche externe des particules est formée au moyen d'au moins un polymère hydrophobe.

Par émulsion inverse eau dans huile, on entend une émulsion dont la phase minoritaire est une phase aqueuse et la phase majoritaire est une phase organique. La phase aqueuse est dispersée dans la phase organique.
La phase aqueuse comprend au moins un composé hydrophile étant, pour l'essentiel, à l'état de soluté dans la phase aqueuse.
En outre, le composé hydrophile est avantageusement très insoluble, voire totalement insoluble, dans le solvant organique majoritaire de la phase organique.

Selon un mode de réalisation particulier de l'invention, la phase aqueuse peut comprendre de l'eau et/ou au moins un solvant hydrosoluble tel que, par exemple, le méthanol, l'éthanol ou le THF. Ledit solvant hydrosoluble présente des propriétés de miscibilité dans l'eau de manière à ce que la phase aqueuse soit homogène. Le composé hydrophile étant à l'état de soluté dans la phase aqueuse, il est avantageusement soluble dans le au moins un solvant hydrosoluble.
En outre, la phase dite aqueuse est avantageusement immiscible avec la phase organique.

De manière avantageuse, la concentration en composé hydrophile dans la phase aqueuse peut être comprise entre 1 et 50 % en poids par rapport au poids de la phase aqueuse, encore plus avantageusement entre 5 et 10 % en poids.

Le composé hydrophile peut être un azurant (utilisés pour améliorer la blancheur des papiers) ou un colorant. Il peut notamment être choisi dans le groupe comprenant le 4,4'-bis(2-benzoxazolyl)-stilbene; le 2,5-bis(5-tert-butyl-2-benzoxazolyl)-thiophene; le Blancophor UWS ; le Blancophor P01 ; le 7-hydroxy-4-methylcoumarin ; le 7-diethylamino-4-methylcoumarin ; le Fluorescent Brightner 28 (FB28), et leurs mélanges.

Le Fluorescent Brightener 28 (FB28), dont le numéro CAS est 4404-43-7, correspond à la formule suivante, C₄₀H₄₄N₁₂O₁₀S₂ :

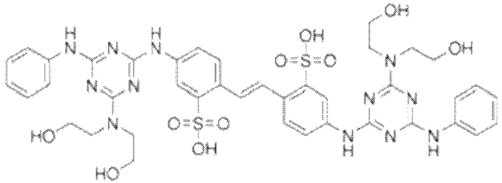

S'agissant de la phase organique, elle comprend au moins un solvant organique pouvant être choisi dans le groupe comprenant le cyclohexane, le toluène, le p-xylène, le dichlorométhane, le gamma nonalactone, et leurs mélanges.

La phase organique comprend en outre au moins un polymère hydrophobe.

De manière avantageuse, la concentration en polymère hydrophobe dans la phase organique est comprise entre 2 et 10 % en poids par rapport au poids de la phase organique, encore plus avantageusement entre 4 et 8 % en poids.

Le polymère hydrophobe pouvant être mis en œuvre dans le cadre de la présente invention peut être notamment choisi dans le groupe comprenant les composés suivants (numéro CAS) :
- polyéthylène 40 stéarate (9004-99-3) ;
- poly(vinylidene chloride-co-vinyl chloride) (9011-06-7) ;
- poly(styrene-co-maleic anhydride) (26762-29-8 et 9011-13-6) ;
- polyvinylpyrrolidone (9003-39-8) ;
- poly(vinyl butyral-co-vinyl alcohol-co-vinyl acetate) (27360-07-2) ;
- poly(maleic anhydride-act-1-octadecene) (25266-02-8) ;
- poly(chlorure de vinyle) (9002-86-2) ;
- PEOX poly-(2-ethyl-2-oxazoline) (25805-17-8)
- PLGA (poly(lactic-co-glycolic acid)) ;
- leurs mélanges.

Les polymères hydrophobes pouvant être utilisés dans le cadre du procédé - objet de l'invention, peuvent avantageusement présenter un poids moléculaire supérieur à 9000g/mol.

En outre, de manière avantageuse, la couche externe des particules n'est pas réticulée.

Le procédé - objet de la présente invention comprend en outre une étape de préparation d'une émulsion inverse, dans laquelle le mélange des phases organique et aqueuse peut être avantageusement réalisé en présence d'au moins un agent tensioactif.

Selon ce mode de réalisation particulier, la phase organique peut comprendre au moins un agent tensioactif.

L'agent tensioactif est avantageusement solubilisé dans la phase organique et préalablement à la formation de l'émulsion inverse eau dans huile, afin notamment d'éviter d'éventuels problèmes de cinétique de solubilisation.

La concentration en agent tensioactif dans la phase organique est préférentiellement comprise entre 0 et 1 mol/L, plus avantageusement de l'ordre de 0,1 mol/L.

L'agent tensioactif peut notamment être choisi dans le groupe comprenant l'AOT (de l'acronyme anglo-saxon AOT *« dioctyl sulfosuccinate sodium salt »,* sel de sodium de dioctyl sufosuccinate), l'Igepal® CO 520, le Triton® X100, l'hexanol, le sodium dodecyl sulfate, et leurs mélanges.

Selon un mode de réalisation préféré, le tensioactif est un mélange de tensioactifs non ionique/anionique, notamment un mélange AOT/Igepal® CO 520 dont le rapport molaire est avantageusement 60/40.

L'Igepal® CO 520, dont le numéro CAS est 68412-54-4, correspond au composé répondant à la formule suivante : 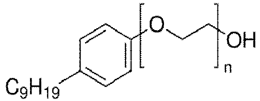 n étant un nombre entier avantageusement compris entre 0 et 40.

Le Triton® X100, dont le numéro CAS est 9002-93-1, correspond au composé répondant à la formule suivante : 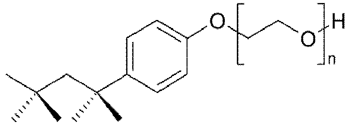 n étant un nombre entier avantageusement compris entre 0 et 20.

Selon un autre mode de réalisation particulier, la phase aqueuse peut également comprendre au moins un agent tensio-actif..

La formation de l'émulsion inverse eau dans huile peut être avantageusement réalisée en ajoutant lentement, généralement au goutte à goutte, et avantageusement sous agitation vigoureuse la phase aqueuse à la phase organique.

L'agitation, généralement mécanique, est avantageusement prolongée d'un délai suffisant pour obtenir l'émulsion sous une forme stabilisée.

La formation de l'émulsion inverse est réalisée selon les techniques classiques faisant partie des connaissances de l'homme du métier.

Comme déjà précisé, une fois l'émulsion obtenue, le procédé de l'invention comprend en outre une étape de formation des particules.

Cette étape est avantageusement réalisée par trempe thermique de l'émulsion. Il s'agit ainsi d'exposer l'émulsion à une température permettant de figer les gouttelettes de l'émulsion à l'état de particules. La trempe thermique est de préférence réalisée à une température comprise entre -200 et -220 °C, encore plus avantageusement entre -205 et -210 °C. La formation des particules est généralement instantanée.

Selon un mode de réalisation avantageux, les particules sont formées en versant l'émulsion, avantageusement au goutte à goutte, dans de l'azote liquide.

Les particules ainsi obtenues peuvent ensuite être isolées, notamment par filtration.

Suite à leur formation, les particules peuvent être lyophilisées, de manière notamment à éliminer, intégralement ou en partie, le solvant organique et l'eau résiduels.

Les particules isolées peuvent ainsi présenter moins de 10 % en poids, par rapport au poids des particules, en solvant organique et en eau.

La présente invention concerne également les particules obtenues par mise en œuvre du procédé décrit ci-avant. Elles présentent avantageusement une forme sphérique et un diamètre moyen avantageusement inférieur à 5 micromètres, et encore plus avantageusement inférieur à 1 micromètre.

Selon un mode de réalisation particulier de l'invention, les particules peuvent cumuler les rôles de composé fluorescent et de carrier (agent véhiculant, c'est-à-dire un composé permettant d'exacerber la fluorescence d'un composé).

Un carrier peut notamment améliorer l'efficacité des OBA (agent optique de blanchiment, de l'acronyme anglo-saxon OBA « *Optical Brightening Agent* ») utilisés dans l'industrie papetière, et ainsi augmenter la blancheur des papiers.

Selon un mode de réalisation particulier, le polymère hydrophobe présente des propriétés de carrier.

Le polymère hydrophobe peut également se dégrader progressivement au contact de l'eau. C'est notamment le cas du PLGA, poly(lactic-co-glycolic acid). Il est alors possible de contrôler la vitesse de relargage du composé hydrophile. Ce type de polymère est donc adapté à des particules utilisables dans l'industrie pharmaceutique, notamment pour l'encapsulation et le relargage d'un principe actif à vitesse contrôlée dans l'estomac.

Les particules - objet de la présente invention, peuvent être utilisées dans de nombreux domaines techniques, notamment en fonction des propriétés du composé hydrophile et de l'enrobage hydrophobe. Les domaines d'intérêt incluent notamment l'industrie papetière. Les particules peuvent ainsi être utilisées en tant que colorants textiles, azurants et colorants dans l'industrie papetière, dans les encres d'imprimerie par exemple.

Les particules considérées selon l'invention peuvent être aisément dispersables dans des solvants organiques (solvants capables de solubiliser le polymère hydrophobe initial). En revanche, leur dispersibilité dans l'eau peut nécessiter de très forts cisaillements -par exemple, par agitation ultraturax.

La présente invention concerne un procédé de fabrication de papier mettant en œuvre les particules obtenues selon le procédé décrit ci-avant. Les particules peuvent notamment être intégrées dans la suspension cellulosique, ou par dépôt (enduction sur la feuille une fois formée).

La présente invention concerne également un procédé de traitement de la suspension cellulosique mise en œuvre dans un procédé de fabrication du papier, par introduction dans la suspension cellulosique d'au moins un type de particules telles que décrites ci-avant.

Les particules peuvent ainsi être intégrées dans la suspension cellulosique, c'est-à-dire in situ, lors de la fabrication du papier. Elles peuvent également être introduites par enduction sur le papier une fois celui-ci fabriqué.

Ainsi, les pertes d'azurants ou de colorants peuvent être réduites, voire nulles. En effet, la taille des particules et leur faible hydrosolubilité leur permettent d'être retenues par les fibres de papier. De manière avantageuse, après imprégnation, les solutions aqueuses d'azurants ou de colorants ne contiennent plus de particules et ne nécessitent donc pas de retraitement.

La quantité d'azurants ou de colorants sur le papier peut ainsi être contrôlée. Par conséquent, les blancheurs et teintes de couleurs sont toujours parfaitement similaires et les problèmes de reproductibilité sont résolus.

Comme déjà dit, selon le procédé - objet de l'invention, la couche polymérique enrobant les particules peut notamment assurer la protection contre le vieillissement UV du composé encapsulé. Cela peut s'avérer particulièrement avantageux, dans le cas des colorants et azurants utilisés dans l'industrie papetière et dont la sensibilité aux UV peut être importante. Le vieillissement UV peut en effet conduire à la dégradation des propriétés du papier, les azurants perdant leur blancheur initiale pour devenir jaunâtre. De la même manière, la teinte d'un papier coloré peut rapidement s'estomper et ainsi perdre de son éclat eu égard au vieillissement UV.

Les particules selon l'invention peuvent ainsi allonger considérablement la durée de vie du produit. Par exemple, la cinétique de dégradation d'un fluorophore ou d'un colorant peut être ralentie ou annihilée, notamment en utilisant comme polymère hydrophobe un polymère barrière à l'oxygène.

L'invention et les avantages qui en découlent ressortiront mieux des figures et exemples suivants donnés afin d'illustrer l'invention et non de manière limitative.

### DESCRIPTION DES FIGURES

La figure 1 illustre le vieillissement de particules de FB28 enrobées dans une matrice de PVA selon le procédé - objet de l'invention, par mesure de la fluorescence en fonction de la longueur d'onde.
La figure 2 illustre le vieillissement de particules de FB28 enrobées dans une matrice d'amidon selon le procédé - objet de l'invention, par mesure de la fluorescence en fonction de la longueur d'onde.
La figure 3 illustre le vieillissement de particules de Blancophor P01 enrobées dans une matrice de PVA selon le procédé - objet de l'invention, par mesure de la fluorescence en fonction de la longueur d'onde.

### EXEMPLES DE REALISATION DE L'INVENTION

### Exemple 1

Des particules sont préparées par mise en œuvre du procédé objet de la divulgation. Une phase organique comprenant les composés suivants est préparée :
- 100 mL d'une solution de cyclohexane ;
- du polystyrene (Mw=35000) ;
- 4,0g d'AOT.

La concentration en polystyrène est de 5 % en poids par rapport au poids de la phase organique.
Une phase aqueuse comprenant les composés suivants est préparée :
- de l'eau ;
- un azurant (Fluorescent Brightener 28 ou Blancophor P01)
La concentration en azurant est de 5% en poids par rapport au poids de la phase aqueuse. Le poids total de la phase aqueuse est de 0,65g.

Dans un bêcher contenant la phase organique sous forte agitation, on ajoute goutte à goutte, et à température ambiante, la phase aqueuse.
L'agitation est maintenue pendant 30 minutes afin que l'émulsion s'homogénéise.

L'émulsion ainsi obtenue est ensuite introduite au goutte à goutte dans de l'azote liquide pour figer les gouttelettes à l'état de particules.
L'ensemble des particules ainsi obtenue est ensuite filtré et lyophilisé à l'aide d'un lyophilisateur ou d'un tube ou d'un ballon de Schlenk maintenu sous vide dynamique par une pompe à palette et muni d'un piège froid pendant 24 heures.
La poudre ainsi obtenue se redisperse facilement dans certains solvants organiques (ceux permettant la solubilisation du polymère hydrophobe) mais ne se disperse pas aisément dans l'eau.

### Exemple 2

Des particules sont préparées par mise en œuvre du procédé objet de la divulgation.

Une phase organique comprenant les composés suivants est préparée :
- 100 mL de p-xylene ;
- du poly(styrene-co-anhydride maléique) (Mw=35000) ;
- 2,6g d'AOT et 1,76g d'IGEPAL® CO 520.

La concentration en poly(styrene-co-anhydride maléique) est de 5 % en poids par rapport au poids de la phase organique.

Une phase aqueuse comprenant les composés suivants est préparée :
- de l'eau ;
- un azurant (Fluorescent Brightener 28 ou Blancophor P01).

La concentration en azurant est de 5% en poids par rapport au poids de la phase aqueuse. Le poids total de la phase aqueuse est de 18g.

Dans un bêcher contenant la phase organique sous forte agitation, on ajoute goutte à goutte et à température ambiante, la solution aqueuse.

L'agitation est maintenue pendant 30 minutes afin que l'émulsion s'homogénéise.

L'émulsion ainsi obtenue est ainsi introduite au goutte à goutte dans de l'azote liquide pour figer les gouttelettes à l'état de particules. L'ensemble est ensuite filtré et lyophilisé à l'aide d'un lyophilisateur ou d'un tube ou d'un ballon de Schlenk maintenu sous vide dynamique par une pompe à palette et muni d'un piège froid pendant 24 heures.

La poudre ainsi obtenue se redisperse facilement dans certains solvants organiques (ceux permettant la solubilisation du polymère hydrophobe) mais ne se disperse pas aisément dans l'eau.

### Test de tenue aux UV

Afin de tester la résistance au vieillissement UV des particules obtenues par mise en œuvre du procédé - objet de l'invention, une solution contenant 2g de PVA (alcool polyvinylique) à 10% massique, et 0,5g de particules a été préparée.

Après agitation UltraTurax pendant 5 minutes, on dépose cette solution sur une feuille de papier (épaisseur humide 60 micromètres).

La feuille de papier est ensuite soumise à un test de vieillissement dans une enceinte Suntest de la société ATLAS.

Les conditions de vieillissement sont les suivantes :
- irradiance à 765 W/m² ;
- lampe à arc xénon équipée d'un filtre dit « verre à vitre » coupant les UV en dessous de 310 nanomètres,
- durée d'exposition : 6 heures.

A l'issue de ce test de vieillissement, il apparait que l'échantillon n'a pas subi de vieillissement (blancheur intacte) alors qu'un échantillon contenant le même azurant mais n'ayant pas été obtenu selon la procédé de la présente invention, présente une blancheur moins importante (jaunissement).

Ces tests montrent l'amélioration de la résistance des particules d'azurant au vieillissement UV.

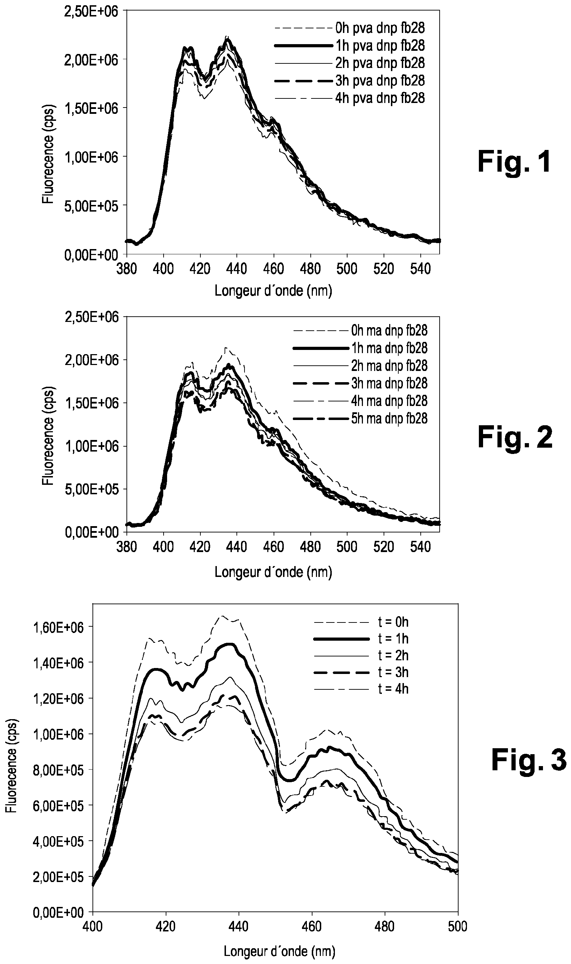

Les particules testées sont les suivantes :
- particules de nanopigments de FB28 enrobés de PVA (figure 1 - vieillissement très modéré) ;
- particules de nanopigments de FB28 enrobés d'amidon (figure 2 - vieillissement ralenti) ;
- particules de nanopigments de Blancophor P01 enrobés de PVA (figure 3 - vieillissement ralenti).

Les particules obtenues selon le procédé - objet de la présente divulgation présentent une meilleure résistance aux UV du composé fluorescent et donc du produit dans lequel celui-ci est incorporé.

## Revendications

1. Procédé de fabrication du papier mettant en œuvre une suspension cellulosique et des particules,
les particules étant intégrées dans la suspension cellulosique, ou déposées sur le papier formé,
les particules présentant un cœur hydrophile enrobé d'une couche polymérique hydrophobe, et étant préalablement préparées selon les étapes suivantes :
- préparation d'une phase aqueuse comprenant au moins un composé hydrophile azurant ou colorant ;
- préparation d'une phase organique comprenant au moins un polymère hydrophobe ;
- formation d'une émulsion inverse eau dans huile par addition de la phase aqueuse dans la phase organique ;
- trempe thermique de l'émulsion ;
- obtention de particules, présentant un diamètre moyen inférieur à 5 micromètres et présentant un cœur hydrophile enrobé d'une couche polymérique hydrophobe ;
- isolation des particules ainsi obtenues.

2. Procédé selon la revendication 1, ***caractérisé* en ce que** la concentration en composé hydrophile dans la phase aqueuse est comprise entre 1 et 50 % en poids par rapport au poids de la phase aqueuse, avantageusement entre 5 et 10 % en poids.

3. Procédé selon la revendication 1 ou 2, ***caractérisé* en ce que** la concentration en polymère hydrophobe dans la phase organique est comprise entre 2 et 10 % en poids par rapport au poids de la phase organique, avantageusement entre 4 et 8 % en poids.

4. Procédé selon l'une des revendications 1 à 3, ***caractérisé* en ce que** l'isolation des particules comprend une étape de lyophilisation.

5. Procédé selon l'une des revendications 1 à 4, ***caractérisé* en ce que** les particules présentent un diamètre moyen inférieur à 1 micromètre.

6. Procédé selon l'une des revendications 1 à 5, ***caractérisé* en ce que** le composé hydrophile est choisi dans le groupe comprenant :
- 4,4'-bis(2-benzoxazolyl)-stilbene ;
- 2,5-bis(5-tert-butyl-2-benzoxazolyl)-thiophene ;
- 7-hydroxy-4-methylcoumarin ;
- 7-diethylamino-4-methylcoumarin ;
- le composé correspondant au numéro CAS 4404-43-7 ;
- leurs mélanges.

7. Procédé selon l'une des revendications 1 à 6, ***caractérisé* en ce que** le polymère hydrophobe est choisi dans le groupe comprenant :
- polyéthylène 40 stéarate;
- poly(vinylidene chloride-co-vinyl chloride) ;
- poly(styrene-co-maleic anhydride) ;
- polyvinylpyrrolidone ;
- poly(vinyl butyral-co-vinyl alcohol-co-vinyl acetate) ;
- poly(maleic anhydride-act-1-octadecene) ;
- poly(chlorure de vinyle) ;
- PEOX poly-(2-ethyl-2-oxazoline) ;
- PLGA poly(lactic-co-glycolic acid) ;
- leurs mélanges.

8. Procédé selon l'une des revendications 1 à 7, ***caractérisé* en ce que** la phase organique comprend en outre un agent tensioactif.

9. Procédé selon la revendication 8, ***caractérisé* en ce que** l'agent tensioactif est choisi dans le groupe comprenant le sel de sodium de dioctyl sufosuccinate, le composé correspondant au numéro CAS 68412-54-4, le composé correspondant au numéro CAS 9002-93-1, l'hexanol, le sodium dodecyl sulfate, et leurs mélanges.

10. Procédé selon l'une des revendications 1 à 9, ***caractérisé* en ce que** la trempe thermique de l'émulsion est réalisée en versant l'émulsion, au goutte à goutte, dans de l'azote liquide.

## Patentansprüche

1. Verfahren zur Herstellung von Papier unter Verwendung einer zellulosischen Suspension und von Partikeln,
die Partikel sind dabei in die zellulosische Suspension integriert, oder auf dem gebildeten Papier abgelagert, die Partikel enthalten einen hydrophilen Kern, umhüllt von einer hydrophoben Polymerschicht, und wurden zuvor in den folgenden Schritten hergestellt:
- Herstellung einer wässrigen Phase mit mindestens einem hydrophilen, Bleichmittel oder Farbstoff,
- Herstellung einer organischen Phase mit mindestens einem hydrophoben Polymer;
- Bildung einer inversen Emulsion Wasser in Öl, durch Zugabe der wässrigen Phase zur organischen Phase
- thermisches Härten der Emulsion,
- Erhalt von Partikeln mit einem Durchschnittsdurchmesser von unter 5 Mikrometern, mit einem von einer hydrophoben Polymerschicht umhüllten hydrophilen Kern;
- Isolation der so erhaltenen Partikel.

2. Verfahren nach Anspruch 1, **dadurch gekennzeichnet, dass** die Konzentration an hydrophilen Bestandteilen in der wässrigen Phase zwischen 1 und 50 Gewichts-%, bezogen auf das Gewicht der wässrigen Phase, beträgt, vorteilhafterweise zwischen 5 und 10 % Gewichts-%.

3. Verfahren nach Anspruch 1 oder 2, **dadurch gekennzeichnet, dass** die Konzentration an hydrophobem Polymer in der organischen Phase zwischen 2 und 10 % Gewichts-%, bezogen auf das Gewicht der organischen Phase, beträgt, vorteilhafterweise zwischen 4 und 8 Gewichts-%.

4. Verfahren nach einem der Ansprüche 1 bis 3, **dadurch gekennzeichnet, dass** die Isolation der Partikel einen Schritt der Lyophilisierung umfasst.

5. Verfahren nach einem der Ansprüche 1 bis 4, **dadurch gekennzeichnet, dass** die Partikel einen Durchschnittsdurchmesser von unter 1 Mikrometer haben.

6. Verfahren nach einem der Ansprüche 1 bis 5, **dadurch gekennzeichnet, dass** die Hydrophile Zusammensetzung ausgewählt wird aus der Gruppe mit:
- 4,4'-bis(2-benzoxazolyl)-stilben,
- 2,5-bis(5-tert-butyl-2-benzoxazolyl)-thiophen,
- 7-hydroxy-4-methylcumarin;
- 7-diethylamino-4-methylcumarin,
- die der Nummer CAS 4404-43-7 entsprechende Zusammensetzung
- ihre Mischungen.

7. Verfahren nach einem der Ansprüche 1 bis 6, **dadurch gekennzeichnet, dass** das hydrophobe Polymer ausgewählt wird aus der Gruppe mit
- Polyethylen- 40- Stearat,
- Poly(vinyliden chlorid-co-vinyl chlorid),
- Poly(styren-co-maleinanhydrid),
- Polyvinylpyrrolidon,
- Poly(vinyl butyral-co-vinyl alcohol-co-vinyl acetat);
- Poly(maleianhydrid-act-l-octadecen),
- Poly(vinylvhlorid);
- PEOX poly-(2-ethyl-2-oxazolin),
- PLGA Poly(lactic-co-glycolic acid),
- ihre Mischungen.

8. Verfahren nach einem der Ansprüche 1 bis 7, **dadurch gekennzeichnet, dass** die organische Phase außerdem ein Tensid enthält.

9. Verfahren nach Anspruch 8, **dadurch gekennzeichnet, dass** das Tensid ausgewählt wird aus der Gruppe mit dem Salz von Natriumdioctyl-Sufosuccinat, die Zusammensetzung, die der Nummer CAS 68412-54-4 entspricht, die Zusammensetzung, die der Nummer CAS 9002-93-1 entspricht, Hexanol, Natrium-Dodecylsulfat, und ihre Mischungen.

10. Verfahren nach einem der Ansprüche 1 bis 9, **dadurch gekennzeichnet, dass** die thermische Härtung der Emulsion dadurch durchgeführt wird, dass die Emulsion tröpfchenweise in flüssigen Stickstoff gegeben wird.

## Claims

1. A method for manufacturing paper implementing a cellulosic suspension and particles, the particles being integrated in the cellulosic suspension or deposited on the paper once formed, the particles having a hydrophilic core coated with a hydrophobic polymeric layer, and being beforehand prepared according to the following steps :
- preparing an aqueous phase comprising at least one hydrophilic optical brightener or colorant;
- preparing an organic phase comprising at least one hydrophobic polymer;
- forming a water-in-oil inverse emulsion by adding the aqueous phase into the organic phase;
- forming the particles by thermal quenching of the emulsion;
- obtaining particles having an average diameter smaller than 5 micrometers and having a hydrophilic core coated with a hydrophobic polymeric layer;
- isolating the particles thus obtained.

2. The method of claim 1, wherein the hydrophilic compound concentration in the aqueous phase is in the range from 1 to 50% by weight with respect to the weight of the aqueous phase, advantageously from 5 to 10% by weight.

3. The method of claim 1 or 2, wherein the hydrophobic polymer concentration in the organic phase is in the range from 2 to 10% by weight with respect to the weight of the organic phase, advantageously from 4 to 8% by weight.

4. The method of any of claims 1 to 3, wherein the particle isolation comprises a freeze drying step.

5. The method of any of claims 1 to 4, wherein the particles have an average diameter smaller than 1 micrometer.

6. The method of any of claims 1 to 5, wherein the hydrophilic compound is selected from the group comprising:
- 4,4'-bis(2-benzoxazolyl)-stilbene;
- 2,5-bis(5-tert-butyl-2-benzoxazolyl)-thiophene;
- 7-hydroxy-4-methylcoumarin;
- 7-diethylamino-4-methylcoumarin;
- the compound corresponding to CAS number 4404-43-7;
- mixtures thereof.

7. The method of any of claims 1 to 6, wherein the hydrophobic polymer is selected from the group comprising:
- polyethylene 40 stearate;
- poly(vinylidene chloride-co-vinyl chloride);
- poly(styrol-co-malein-)anhydrid;
- polyvinylpyrrolidone;
- poly(vinyl butyral-co-vinyl alcohol-co-vinyl acetate);
- poly(maleic anhydride-act-1-octadecene);
- poly(vinyl chloride);
- PEOX poly-(2-ethyl-2-oxazoline);
- PLGA (poly(lactic-co-glycolic acid));
- mixtures thereof.

8. The method of any of claims 1 to 7, wherein the organic phase further comprises a surface active agent.

9. The method of claim 8, wherein the surface active agent is selected from the group comprising dioctyl sodium sulfosuccinate salt, the compound corresponding to CAS number 68412-54-4, the compound corresponding to CAS number 9002-93-1, hexanol, sodium dodecyl sulfate, and mixtures thereof.

10. The method of any of claims 1 to 9, wherein the thermal quenching of the emulsion is performed by pouring the emulsion, with a drip system, into liquid nitrogen.
